# EUROPÄISCHE PATENTSCHRIFT

(11) **EP 2 468 547 B1**
(45) Veröffentlichungstag und Bekanntmachung des Hinweises auf die Patenterteilung: **12.08.2015**
(21) Anmeldenummer: 11009874.6
(22) Anmeldetag: 15.12.2011
(51) Int. Cl.: B60J 7/06

(54) **Faltschiebedach**
Sliding and folding roof
Toit escamotable coulissant et pliant

(30) Priorität: 24.12.2010 DE 102010056245
(43) Veröffentlichungstag der Anmeldung: 27.06.2012
(73) Patentinhaber: Magna Car Top Systems GmbH, 74321 Bietigheim-Bissingen (DE)
(72) Erfinder: Katrini, Waleri, 01257 Dresden (DE); Papendorf, Marcus, 74357 Bönnigheim (DE); Klein, Berthold, 74343 Sachsenheim (DE); Käsweber, Hubert, 71636 Ludwigsburg (DE)
(74) Vertreter: Völger, Silke Beatrix

(56) Entgegenhaltungen:
- EP-A1- 1 500 541
- DE-A1- 10 065 324

## Beschreibung

Die vorliegende Erfindung betrifft ein Faltschiebedach gemäß dem Oberbegriff des Anspruchs 1. Ein solches Dach ist aus DE 10065324 bekannt.

Ein derartiges Faltschiebedach umfasst auf jeder Fahrzeugseite eine Führungsschiene sowie einen Verdeckstoff, der mit Spriegeln verbunden ist und der mit Hilfe dieser Spriegel zwischen einer Offenstellung und einer Schließstellung verstellbar ist. Um diese Verstellbarkeit des Verdeckstoffs zu ermöglichen, umfassen die Spriegel mehrere Schiebespriegel, die mit ihren Enden an den genannten Führungsschienen verschiebbar gelagert sind. Ferner ist es grundsätzlich möglich, einen dieser Spriegel als Eckspriegel auszugestalten, der sich dadurch charakterisiert, dass er in einem Übergangsbereich mit dem Verdeckstoff verbunden ist, wobei in diesem Übergangsbereich in der Schließstellung des Verdeckstoffs ein Heckabschnitt des Verdeckstoffs in einen Dachabschnitt des Verdeckstoffs übergeht. Der Übergang ist dabei eckig ausgestaltet, wodurch der vom Verdeckstoff überdachte Fahrzeuginnenraum auch im Bereich einer Hutablage eine vergleichsweise große Kopffreiheit aufweist.

Problematisch ist bei derartigen Faltschiebedächern die Unterbringung des Verdeckstoffs in der Offenstellung. Erwünscht ist eine Ablage des Verdeckstoffs möglichst tiefliegend, so dass eine weitgehend freie Sicht nach hinten entsteht. Störend ist dabei vor allem der Eckspriegel, da er hierzu vergleichsweise großräumig bewegt werden muss.

Die vorliegende Erfindung beschäftigt sich mit dem Problem, für ein Faltschiebedach der eingangs genannten Art eine verbesserte Ausführungsform anzugeben, die sich insbesondere durch einen einfachen Aufbau auszeichnet, wobei eine raumsparende Unterbringung des Verdeckstoffs in der Offenstellung erwünscht ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Eckspriegel nicht als Schiebespriegel, sondern als Schwenkspriegel auszugestalten, der sich dadurch charakterisiert, dass er mit seinen Enden um eine Schwenkachse verschwenkbar gelagert ist. Dabei hat es sich als besonders vorteilhaft herausgestellt, diesen Schwenkspriegel unmittelbar an den Führungsschienen um besagte Schwenkachse verschwenkbar zu lagern. Die Schwenkachse ist bezüglich der Führungsschienen ortsfest. Somit können aufwendige zusätzliche Maßnahmen zur Lagerung des Schwenkspriegels bzw. des Eckspriegels vermieden werden. Auch kann dadurch eine aufwendige Kinematik zum Verstellen des Eckspriegels vermieden werden.

Zweckmäßig ist der Eckspriegel an einer Innenseite des Verdeckstoffs angeordnet. Hierdurch kann er besonders einfach den Verdeckstoff von innen nach außen spannen.

Von besonderem Vorteil ist eine Ausführungsform, bei welcher der Eckspriegel zwei gerade und parallel zueinander verlaufende Endabschnitte aufweist, die über einen gekrümmten Mittelabschnitt miteinander verbunden sind. An den beiden geraden Endabschnitten ist der Eckspriegel an den beiden Führungsschienen verschwenkbar gelagert. Der viel Ablageraum benötigende gekrümmte Mittelabschnitt kann über die geraden Endabschnitte vergleichsweise einfach großräumig verschwenkt werden und besonders einfach beim Öffnen des Verdeckstoffs vergleichsweise weit nach unten verschwenkt werden. Die geraden Endabschnitte vergrößern dabei den für den Mittelabschnitt realisierbaren Schwenkradius, ohne dabei viel Stauraum zu benötigen.

Besonders zweckmäßig ist eine Ausführungsform, bei welcher der Verdeckstoff nur im Bereich des Mittelabschnitts des Eckspriegels mit dem Eckspriegel verbunden ist. Insbesondere erfolgt keine Anbindung zwischen Eckspriegel und Verdeckstoff im Bereich der geraden Endabschnitte. Hierdurch ist für den Verstellvorgang eine Relativbewegung zwischen Verdeckstoff und den Endabschnitten möglich, was die Kinematik erleichtert.

Der Verdeckstoff kann bspw. eine röhrenförmige Tasche aufweisen, durch welche der Eckspriegel mit seinem Mittelabschnitt hindurch geführt ist. Hierdurch kann besonders einfach eine Verbindung zwischen Verdeckstoff und Eckspriegel realisiert werden, die einerseits Relativbewegungen, insbesondere eine Rotation, zwischen Eckspriegel und Verdeckstoff ermöglicht, während sie andererseits eine Mitnahme des Verdeckstoffs beim Verschwenken des Eckspriegels bzw. ein Verschwenken des Eckspriegels beim Bewegen des Verdeckstoffs bewirkt.

Besonders vorteilhaft ist eine Ausführungsform, bei welcher der Heckabschnitt des Verdeckstoffs eine Heckscheibe enthält, die aus Kunststoff oder Glas hergestellt sein kann.

Die Schwenkachse, um welche der Eckspriegel an den Führungsschienen verschwenkbar gelagert ist, erstreckt sich zweckmäßig horizontal und quer zu einer Längsachse des Faltschiebedachs, die bei am Fahrzeug montiertem Faltschiebedach parallel zur Fahrzeuglängsachse verläuft.

Zweckmäßig kann die jeweilige Führungsschiene als stationäre Führungsschiene ausgestaltet sein, die sich dadurch charakterisiert, dass sie sowohl bei geöffnetem als auch bei geschlossenem Verdeckstoff einen seitlichen Dachrahmen bildet, der sich von der Windschutzscheibe bis zur C-Säule des Fahrzeugs erstreckt.

Alternativ kann die jeweilige Führungsschiene als verstellbare Führungsschiene ausgestaltet sein, die zum Öffnen des Faltschiebedachs bei geöffnetem Verdeckstoff von einer Aufstellposition in eine Ablegeposition verstellbar ist.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den durch die anhängenden Ansprüche definierten Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

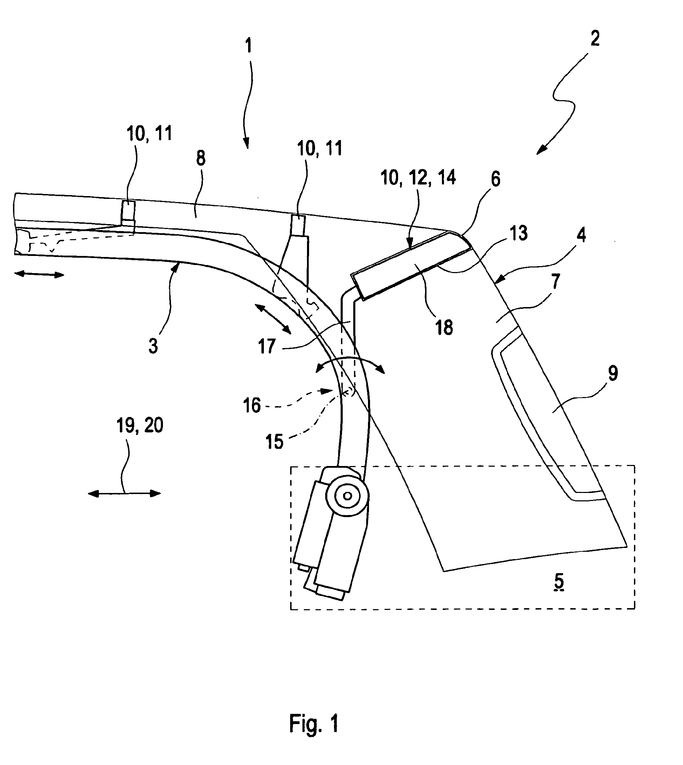

Die einzige Figur 1 zeigt eine stark vereinfachte, schematische Seitenansicht eines Faltschiebedachs im Bereich eines Eckspriegels.

Entsprechend Fig. 1 umfasst ein Faltschiebedach 1 eines hier nur im Bereich des Faltschiebedachs 1 gezeigten Cabriolet-Fahrzeugs 2 auf jeder Fahrzeugseite eine Führungsschiene 3. In der Seitenansicht der Fig. 1 ist nur eine der Führungschienen 3 erkennbar. Das Faltschiebedach 1 umfasst außerdem einen Verdeckstoff 4, der zwischen einer in Fig. 1 dargestellten Schließstellung und einer nicht gezeigten Offenstellung verstellbar ist, wobei sich der Verdeckstoff 4 in der Offenstellung in einem Ablagebereich 5 befindet, der in Fig. 1 durch einen mit unterbrochener Linie gezeichneten Rahmen angedeutet ist. Erkennbar besitzt der Verdeckstoff 4 in seiner Schließstellung heckseitig eine eckige Kontur, die mit Hilfe eines eckig ausgeführten Übergangsbereichs 6 realisiert ist, in dem ein Heckabschnitt 7 des Verdeckstoffs 4 in einen Dachabschnitt 8 des Verdeckstoff 4 übergeht. Hierdurch erhält der Verdeckstoff 4 in der Schließstellung im Heckbereich eine abgewinkelte oder kantige Kontur. Der Heckabschnitt 7 des Verdeckstoffs 4 enthält zweckmäßig eine Heckscheibe 9, die flexibel oder starr ausgeführt sein kann und die aus Kunststoff oder Glas hergestellt sein kann.

Das Faltschiebedach 1 umfasst außerdem mehrere Spriegel 10, die sich jeweils von der einen Führungsschiene 3 zur anderen Führungsschiene 3 erstrecken und die zum Aufspannen des Verdeckstoffs 4 in der Schließstellung dienen. Mit Hilfe dieser Spriegel 10 ist der Verdeckstoff 4 zwischen der Offenstellung und der Schließstellung verstellbar. Hierzu können einige der Spriegel 10 als Schiebespriegel 11 ausgestaltet sein, die jeweils mit ihren Enden an der jeweiligen Führungsschiene 3 verschiebbar gelagert sind. Die jeweilige Verschiebbarkeit der Schiebespriegel 11 ist in Fig. 1 durch Doppelpfeile angedeutet, die entlang der jeweiligen Führungsschiene 3 verlaufen.

Einer der Spriegel 10 ist als Eckspriegel 12 konfiguriert. Hierzu erstreckt sich der Eckspriegel 12 in der Schließstellung des Verdeckstoffs 4 im zuvor genannten Übergangsbereich 6. Insbesondere ist er in diesem Übergangsbereich 6 mit dem Verdeckstoff 4 verbunden. Zur Realisierung dieser Verbindung zwischen Verdeckstoff 4 und Eckspriegel 12 kann am Verdeckstoff 4 an der Innenseite eine röhrenförmige Tasche 13 ausgebildet sein, durch welche der Eckspriegel 12 hindurch geführt ist.

Der Eckspriegel 12 ist beim hier vorgestellten Faltschiebedach 1 als Schwenkspriegel 14 ausgestaltet, so dass er mit seinen Enden um eine Schwenkachse 15 verschwenkbar ist. Die Verschwenkbarkeit des Eckspriegels 12 bzw. Schwenkspriegels 14 ist in Fig. 1 durch einen Drehdoppelpfeil angedeutet. Beim hier vorgestellten Faltschiebedach 1 ist der Eckspriegel 12 bzw. der Schwenkspriegel 14 mit seinen Enden an den Führungsschienen 3 um besagte Schwenkachse 15 verschwenkbar gelagert. Die Lagerung des Eckspriegels 12 erfolgt dabei unmittelbar an der jeweiligen Führungsschiene 3. Eine entsprechende Lagerstelle ist in Fig. 1 mit 16 bezeichnet.

Die Spriegel 10 sind zweckmäßig an einer Innenseite des Verdeckstoffs 4 angeordnet. Insbesondere ist auch der Eckspriegel 12 an der Innenseite des Verdeckstoffs 4 angeordnet.

Der Eckspriegel 12 weist im gezeigten Beispiel zwei gerade und parallel zueinander verlaufende Endabschnitte 17 auf sowie einen gekrümmten Mittelabschnitt 18, der die beiden Endabschnitte 17 miteinander verbindet. Der gekrümmte Mittelabschnitt 18 definiert die Außenkontur des Übergangsbereichs 6. Im Beispiel erstreckt sich der Mittelabschnitt 18 durch die Tasche 13, während die geraden Endabschnitte 17 außerhalb der Tasche 13 verlaufen. Insbesondere ist der Verdeckstoff 4 mit dem Eckspriegel 12 nur im Bereich des Mittelabschnitts 18 verbunden, wodurch Relativbewegungen zwischen dem Verdeckstoff 4 und den Endabschnitten 17 möglich sind.

Die Schwenkachse 15 erstreckt sich hier senkrecht zur Zeichnungsebene und somit horizontal und quer zu einer Längsachse 19 des Faltschiebedachs 1, die bei montiertem Faltschiebedach 1 mit einer Längsachse 20 des Cabriolets 2, also mit der Fahrzeuglängsachse 20 zusammenfällt.

Zweckmäßig sind die Führungsschienen 3 als stationäre Führungsschienen 3 ausgestaltet. Sie verbleiben also beim Öffnen und Schließen des Verdeckstoffs 4 an Ort und Stelle und definieren bspw. einen seitlichen Dachrahmen. Alternativ ist es grundsätzlich ebenso möglich, die Führungsschienen 3 als verstellbare Führungsschienen 3 auszugestalten. In diesem Fall können die Führungsschienen 3 bei geöffnetem Verdeckstoff 4 von einer in Fig. 1 erkennbaren Aufstellposition in eine hier nicht gezeigte Ablegeposition verstellt werden, in der sich die Führungsschienen 3 bspw. ebenfalls im Ablagebereich 5 befinden.

## Patentansprüche

1. Faltschiebedach für ein Cabriolet-Fahrzeug (2),
- mit jeweils einer Führungsschiene (3) auf jeder Fahrzeugseite,
- mit einem Verdeckstoff (4), der mit Spriegeln (10) verbunden ist und mit Hilfe dieser Spriegel (10) zwischen einer Offenstellung und einer Schließstellung verstellbar ist,
- wobei die Spriegel (10) mehrere Schiebespriegel (11) umfassen, die mit ihren Enden an den Führungsschienen (3) verschiebbar gelagert sind,
- wobei die Spriegel (10) einen Eckspriegel (12) umfassen, der in einem Übergangsbereich (6) mit dem Verdeckstoff (4) verbunden ist, in dem in der Schließstellung ein Heckabschnitt (7) des Verdeckstoffs (4) in einen Dachabschnitt (8) des Verdeckstoffs (4) übergeht,
**dadurch gekennzeichnet, dass** der Eckspriegel (12) als Schwenkspriegel (14) ausgestaltet ist, der mit seinen Enden um eine Schwenkachse (15) an den Führungsschienen (3) verschwenkbar gelagert ist.

2. Faltschiebedach nach Anspruch 1,
**dadurch gekennzeichnet,**
**dass** der Eckspriegel (12) an einer Innenseite des Verdeckstoffs (4) angeordnet ist.

3. Faltschiebedach nach Anspruch 1 oder 2,
**dadurch gekennzeichnet,**
**dass** der Eckspriegel (12) zwei gerade und parallel zueinander verlaufende Endabschnitte (17) aufweist, die über einen gekrümmten Mittelabschnitt (18) miteinander verbunden sind.

4. Faltschiebedach nach Anspruch 3,
**dadurch gekennzeichnet,**
**dass** der Verdeckstoff (4) nur im Bereich des Mittelabschnitts (18) mit dem Eckspriegel (12) verbunden ist.

5. Faltschiebedach nach einem der Ansprüche 1 bis 4,
**dadurch gekennzeichnet,**
**dass** der Verdeckstoff (4) eine röhrenförmige Tasche (13) aufweist, durch welche der Eckspriegel (12) hindurch geführt ist.

6. Faltschiebedach nach einem der Ansprüche 1 bis 5,
**dadurch gekennzeichnet,**
**dass** der Heckabschnitt (7) des Verdeckstoffs (4) eine Heckscheibe (9) enthält.

7. Faltschiebedach nach einem der Ansprüche 1 bis 6,
**dadurch gekennzeichnet,**
**dass** die Schwenkachse (15) horizontal und quer zu einer Längsachse (19) des Faltschiebedachs (1) verläuft.

8. Faltschiebedach nach einem der Ansprüche 1 bis 7,
**dadurch gekennzeichnet,**
**dass** die jeweilige Führungsschiene (3) als stationäre Führungsschiene (3) ausgestaltet ist.

9. Faltschiebedach nach einem der Ansprüche 1 bis 7,
**dadurch gekennzeichnet,**
**dass** die jeweilige Führungsschiene (3) als verstellbare Führungsschiene (3) ausgestaltet ist, die zum Öffnen des Faltschiebedachs (1) bei geöffnetem Verdeckstoff (4) von einer Aufstellposition in eine Ablegeposition verstellbar ist.

## Claims

1. Sliding and folding roof for a cabriolet vehicle (2),
- with a respective guide rail (3) on each side of the vehicle,
- with a cabriolet-top cloth (4) which is connected to bows (10) and is adjustable between an open position and a closed position with the aid of said bows (10),
- wherein the bows (10) comprise a plurality of sliding bows (11) which are mounted by the ends thereof on the guide rails (3) in a displaceable manner,
- wherein the bows (10) comprise a corner bow (12) which is connected to the cabriolet-top cloth (4) in a transition region (6) in which, in the closed position, a rear portion (7) of the cabriolet-top cloth (4) merges into a roof portion (8) of the cabriolet-top cloth (4),
**characterized in that** the corner bow (12) is configured as a pivoting bow (14) which is mounted by the ends thereof on the guide rails (3) so as to be pivotable about a pivot axis (15).

2. Sliding and folding roof according to Claim 1, **characterized in that** the corner bow (12) is arranged on an inner side of the cabriolet-top cloth (4).

3. Sliding and folding roof according to Claim 1 or 2, **characterized in that** the corner bow (12) has two end portions (17) which run rectilinearly and parallel to each other and are connected to each other via a curved central portion (18).

4. Sliding and folding roof according to Claim 3, **characterized in that** the cabriolet-top cloth (4) is connected to the corner bow (12) only in the region of the central portion (18).

5. Sliding and folding roof according to one of Claims 1 to 4, **characterized in that** the cabriolet-top cloth (4) has a tubular pocket (13) through which the corner bow (12) is guided.

6. Sliding and folding roof according to one of Claims 1 to 5, **characterized in that** the rear portion (7) of the cabriolet-top cloth (4) contains a rear window (9).

7. Sliding and folding roof according to one of Claims 1 to 6, **characterized in that** the pivot axis (15) runs horizontally and transversely with respect to a longitudinal axis (19) of the sliding and folding roof (1).

8. Sliding and folding roof according to one of Claims 1 to 7, **characterized in that** the respective guide rail (3) is configured as a stationary guide rail (3).

9. Sliding and folding roof according to one of Claims 1 to 7, **characterized in that** the respective guide rail (3) is configured as an adjustable guide rail (3) which is adjustable from an erected position into a storage position in order to open the sliding and folding roof (1) with the cabriolet-top cloth (4) open.

## Revendications

1. Toit escamotable coulissant et pliant pour un véhicule cabriolet (2),
- comprenant à chaque fois un rail de guidage (3) de chaque côté du véhicule,
- comprenant une toile de capote (4) qui est connectée par des arceaux (10) et qui peut être déplacée à l'aide de ces arceaux (10) entre une position ouverte et une position fermée,
- les arceaux (10) comprenant plusieurs arceaux coulissants (11) qui sont supportés de manière déplaçable avec leurs extrémités sur les rails de guidage (3),
- les arceaux (10) comprenant un arceau de coin (12) qui est connecté dans une région de transition (6) à la toile de capote (4), en ce qu'une portion arrière (7) de la toile de capote (4) se prolonge dans la position fermée par une portion de toit (8) de la toile de capote (4),
**caractérisé en ce que**
l'arceau de coin (12) est configuré sous forme d'arceau pivotant (14) qui est supporté avec ses extrémités sur les rails de guidage (3) de manière pivotante autour d'un axe de pivotement (15).

2. Toit escamotable coulissant et pliant selon la revendication 1,
**caractérisé en ce que**
l'arceau de coin (12) est disposé au niveau d'un côté intérieur de la toile de capote (4).

3. Toit escamotable coulissant et pliant selon la revendication 1 ou 2,
**caractérisé en ce que**
l'arceau de coin (12) présente deux portions d'extrémité (17) droites et s'étendant parallèlement l'une à l'autre, lesquelles sont connectées l'une à l'autre par le biais d'une portion centrale courbe (18).

4. Toit escamotable coulissant et pliant selon la revendication 3,
**caractérisé en ce que**
la toile de capote (4) est connectée à l'arceau de coin (12) uniquement dans la région de la portion centrale (18).

5. Toit escamotable coulissant et pliant selon l'une quelconque des revendications 1 à 4,
**caractérisé en ce que**
la toile de capote (4) présente une cavité tubulaire (13) à travers laquelle est guidé l'arceau de coin (12).

6. Toit escamotable coulissant et pliant selon l'une quelconque des revendications 1 à 5,
**caractérisé en ce que**
la portion arrière (7) de la toile de capote (4) contient une vitre arrière (9).

7. Toit escamotable coulissant et pliant selon l'une quelconque des revendications 1 à 6,
**caractérisé en ce que**
l'axe de pivotement (15) s'étend horizontalement et transversalement à un axe longitudinal (10) du toit escametable coulissant et pliant (1).

8. Toit escamotable coulissant et pliant selon l'une quelconque des revendications 1 à 7,
**caractérisé en ce que**
le rail de guidage respectif (3) est configuré sous forme de rail de guidage stationnaire (3).

9. Toit escamotable coulissant et pliant selon l'une quelconque des revendications 1 à 7,
**caractérisé en ce que**
le rail de guidage respectif (3) est configuré sous forme de rail de guidage déplaçable (3) qui peut être déplacé, pour l'ouverture du toit escamotable coulissant et pliant (1) lorsque la toile de capote est ouverte (4), d'une position exposée dans une position rangée.
